# EUROPEAN PATENT APPLICATION

(11) **EP 4 507 430 A1**
(43) Date of publication of application: **12.02.2025**
(21) Application number: 23799213.6
(22) Date of filing: 27.04.2023
(51) Int. Cl.: H04W 72/04

(54) **DATA TRANSMISSION METHOD AND DEVICE, STORAGE MEDIUM AND ELECTRONIC DEVICE**

(30) Priority: 05.05.2022 CN 202210482321
(71) Applicant: ZTE Corporation, Shenzhen, Guangdong 518057 (CN)
(72) Inventor: XIN, Yu, Shenzhen, Guangdong 518057 (CN); YU, Guanghui, Shenzhen, Guangdong 518057 (CN); HUA, Jian, Shenzhen, Guangdong 518057 (CN); BAO, Tong, Shenzhen, Guangdong 518057 (CN); XU, Jin, Shenzhen, Guangdong 518057 (CN); HU, Liujun, Shenzhen, Guangdong 518057 (CN)
(74) Representative: Chimini, Francesco
(86) International application number: PCT/CN2023/091314
(87) International publication number: WO 2023/213227

(57) **Abstract**

Provided are a data transmission method and apparatus, a storage medium and an electronic device. The method includes: data to be transmitted in N frequency-domain resource blocks is determined, wherein the N frequency-domain resource blocks respectively include k(n) sub-carriers, n is a positive integer less than or equal to N, N is an integer greater than 1, and k(n) is a positive integer; the N frequency-domain resource blocks are divided into M groups of frequency-domain resource blocks in which each group includes L(m) frequency-domain resource blocks, wherein sub-carrier spacings of the L(m) frequency-domain resource blocks in each group are equal, the sub-carrier spacings of adjacent groups are unequal, and L(m), m and M are all positive integers; the data to be transmitted on the L(m) frequency-domain resource blocks in each group of frequency-domain resource blocks is respectively processed to from L(m) groups of data sequences, and the L(m) groups of data sequences are processed to form a group of data sequences; and M groups of data sequences of the M groups of frequency-domain resource blocks are processed to form a group of combined data sequences, and the group of combined data sequences is transmitted.

## Description

### Cross-Reference to Related Application

The present invention claims the priority of Chinese Patent Application 202210482321.4, filed in the China Patent Office on May 05, 2022, and entitled "Data Transmission Method and Apparatus, Storage Medium and Electronic Apparatus", the entire contents of which are herein incorporated by reference.

### Technical Field

Embodiments of the present invention relate to the field of communications, and particular relates to a data transmission method and apparatus, a storage medium and an electronic apparatus.

### Background

The fifth generation new radio (5G NR) communication technology utilizes an orthogonal frequency division multiplexing system with cyclic prefix (CP-OFDM) as a basic waveform, but the performance of a CP-OFDM system is relatively sensitive to a frequency offset and a time offset between adjacent sub-bands, this is mainly because the spectrum leakage of the CP-OFDM system is relatively large, thus resulting in inter-band interference easily.

The span of frequency bands used by a future 6G service is very large, and the bandwidths of the sub-bands may also change along with changes in the service. If the sub-bands of different sub-carrier spacings are separately processed, the complexity is relatively high, and a multi-bandwidth channel cannot be flexibly supported.

No effective solution has been proposed for these problems yet.

Therefore, it is necessary to improve related art to overcome the defects in the related art.

### Summary

The embodiments of the present invention provide a data transmission method and apparatus, a storage medium and an electronic apparatus, so as to at least solve the problem in the related art of it being impossible to flexibly support a multi-bandwidth channel.

According to one embodiment of the present invention, provided is a data transmission method, including: data to be transmitted in N frequency-domain resource blocks is determined, wherein the N frequency-domain resource blocks respectively include k(n) sub-carriers, n is a positive integer less than or equal to N, N is an integer greater than 1, and k(n) is a positive integer; the N frequency-domain resource blocks are divided into M groups of frequency-domain resource blocks in which each group includes L(m) frequency-domain resource blocks, wherein sub-carrier spacings of the L(m) frequency-domain resource blocks in each group are equal, the sub-carrier spacings of adjacent groups are unequal, and L(m), m and M are all positive integers; the data to be transmitted on the L(m) frequency-domain resource blocks in each group of frequency-domain resource blocks is respectively processed to from L(m) groups of data sequences, and the L(m) groups of data sequences are processed to form a group of data sequences; and M groups of data sequences of the M groups of frequency-domain resource blocks are processed to form a group of combined data sequences, and transmitting the group of combined data sequences.

According to one embodiment of the present invention, provided is a data transmission apparatus, including: a determination module, configured to determine data to be transmitted in N frequency-domain resource blocks, wherein the N frequency-domain resource blocks respectively include k(n) sub-carriers, n is a positive integer less than or equal to N, N is an integer greater than 1, and k(n) is a positive integer; a division module, configured to divide the N frequency-domain resource blocks into M groups of frequency-domain resource blocks in which each group includes L(m) frequency-domain resource blocks, wherein sub-carrier spacings of the L(m) frequency-domain resource blocks in each group are equal, the sub-carrier spacings of adjacent groups are unequal, and L(m), m and M are all positive integers; a processing module, configured to respectively process the data to be transmitted on the L(m) frequency-domain resource blocks in each group of frequency-domain resource blocks to from L(m) groups of data sequences, and process the L(m) groups of data sequences to form a group of data sequences; and a control module, configured to process M groups of data sequences of the M groups of frequency-domain resource blocks to form a group of combined data sequences, and transmit the group of combined data sequences.

By means of the present invention, data to be transmitted in N frequency-domain resource blocks including k(n) sub-carriers is determined, and the N frequency-domain resource blocks are divided into M groups of frequency-domain resource blocks in which each group includes L(m) frequency-domain resource blocks having equal bandwidths, wherein the sub-carrier spacings of the L(m) frequency-domain resource blocks in the same group among the M groups of frequency-domain resource blocks are equal, and the sub-carrier spacings of adjacent groups are unequal; the data to be transmitted on the L(m) frequency-domain resource blocks in each group of frequency-domain resource blocks is respectively processed to from L(m) groups of data sequences, and the L(m) groups of data sequences are processed to form a group of data sequences; and M groups of data sequences of the M groups of frequency-domain resource blocks are processed to form a group of combined data sequences, and the group of combined data sequences is transmitted. In the M groups of frequency-domain resource blocks in the present solution, the frequency-domain resource blocks in different groups may have equal or unequal bandwidths, so that waveform functions having different parameters may be used for windowing or filtering, thereby solving the problem in the related art of it being impossible to flexibly support a multi-bandwidth channel.

### Brief Description of the Drawings

Fig. 1 is a block diagram of a hardware structure of a computer terminal of an optional data transmission method according to an embodiment of the present invention;
Fig. 2 is a flowchart of an optional data transmission method according to an embodiment of the present invention;
Fig. 3 is a schematic diagram of an optional data transmission method in Embodiment 1;
Fig. 4 is another schematic diagram of an optional data transmission method in Embodiment 2;
Fig. 5 is a schematic diagram of an optional method for transmitting a group of time-domain data sequences in Embodiment 3; and
Fig. 6 is a structural block diagram of an optional data transmission apparatus according to an embodiment of the present invention.

### Detailed Description of the Embodiments

In order to enable those skilled in the art to better understand the solutions of the present invention, a clear and complete description of technical solutions in the embodiments of the present invention will be given below, in combination with the drawings in the embodiments of the present invention. Apparently, the embodiments described below are merely a part, but not all, of the embodiments of the present invention. All of other embodiments, obtained by those ordinary skilled in the art based on the embodiments in the present invention without any creative effort, fall into the protection scope of the present invention.

It should be noted that, the terms "first" and "second" and the like in the specification, claims and the above-mentioned drawings of the present invention are used for distinguishing similar objects, and are not necessarily used for describing a specific sequence or precedence order. It should be understood that the data used in this way may be interchanged under appropriate circumstances, so that the embodiments of the present invention described herein may be implemented in a sequence other than those illustrated or described herein. In addition, the terms "including" and "having", and any variations thereof are intended to cover non-exclusive inclusions, for example, processes, methods, systems, products or devices including a series of steps or units are not necessarily limited to those clearly listed steps or units, but may include other steps or units that are not clearly listed or are inherent to these processes, methods, products or devices.

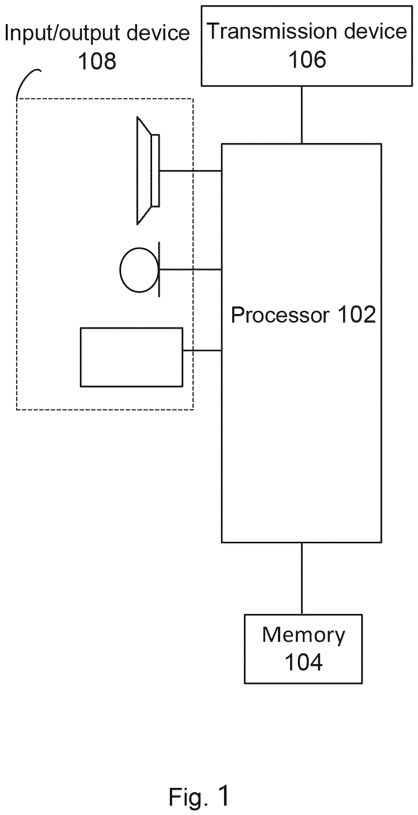

Method embodiments provided in the embodiments of the present invention may be executed in a computer terminal or a similar computing apparatus. Taking operation on the computer terminal as an example, Fig. 1 is a block diagram of a hardware structure of a computer terminal of a data transmission method according to an embodiment of the present invention. As shown in Fig. 1, the computer terminal may include one or more processors102 (only one is shown in Fig. 1) (the processor 102 may include, but is not limited to, a processing apparatus such as a micro-programmed control unit (MCU) or a field-programmable gate array (FPGA), or the like), and a memory 104 for storing data, wherein the computer terminal may further include a transmission device 106 for a communication function, and an input and output device 108. Those ordinary skilled in the art may understand that the structure shown in Fig. 1 is only illustrative and does not limit the structure of the computer terminal. For example, the computer terminal may further include more or fewer components than those shown in Fig. 1, or have a configuration different from that shown in Fig. 1.

The memory 104 may be configured to store a computer program, for example, software programs and modules of an application software, for example, a computer program corresponding to the data transmission method in the embodiments of the present invention, and the processor 102 executes various functional applications and data processing, that is, implements the above method, by running the computer program stored in the memory 104. The memory 104 may include a highspeed random access memory, and may further include a non-volatile memory, such as one or more magnetic storage apparatuses, a flash memory, or other non-volatile solid-state memories. In some instances, the memory 104 may further include memories that are disposed remotely relative to the processor 102, and these remote memories may be connected to a mobile terminal by a network. Instances of the network include, but are not limited to, the Internet, an intranet, a local area network, a mobile communication network, and combinations thereof.

The transmission device 106 is configured to receive or send data via a network. Specific instances of the above network may include a wireless network provided by a communication provider of the mobile terminal. In one embodiment, the transmission device 106 includes a network interface controller (NIC for short), which may be connected with other network devices via a base station to communicate with the Internet. In one embodiment, the transmission device 106 may be a radio frequency (RF for short) module, which is configured to communicate with the Internet in a wireless manner.

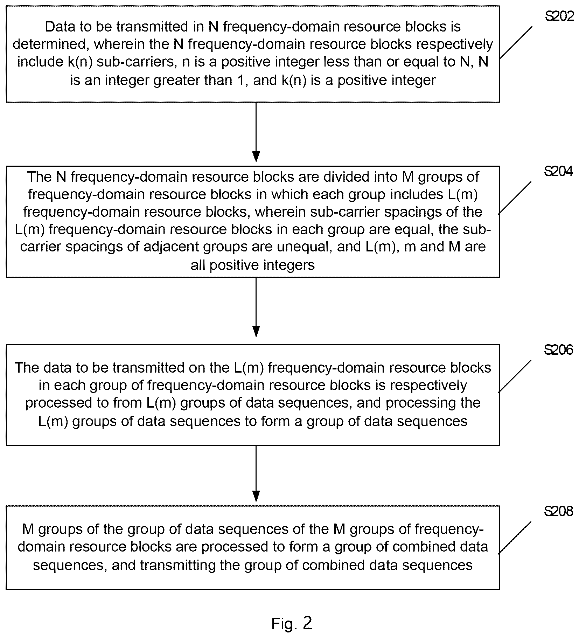

In the present embodiment, a data transmission method running on the computer terminal is provided, Fig. 2 is a flowchart of a data transmission method according to an embodiment of the present invention, and as shown in Fig. 2, the process includes the following steps:
Step S202: data to be transmitted in N frequency-domain resource blocks is determined, wherein the N frequency-domain resource blocks respectively include k(n) sub-carriers, n is a positive integer less than or equal to N, N is an integer greater than 1, and k(n) is a positive integer;
step S204: the N frequency-domain resource blocks are divided into M groups of frequency-domain resource blocks in which each group includes L(m) frequency-domain resource blocks, wherein sub-carrier spacings of the L(m) frequency-domain resource blocks in each group are equal, the sub-carrier spacings of adjacent groups are unequal, and L(m), m and M are all positive integers;
step S206: the data to be transmitted on the L(m) frequency-domain resource blocks in each group of frequency-domain resource blocks is respectively processed to from L(m) groups of data sequences, and processing the L(m) groups of data sequences to form a group of data sequences; and
step S208: M groups of data sequences of the M groups of frequency-domain resource blocks are processed to form a group of combined data sequences, and transmitting the group of combined data sequences.

By means of the above steps, data to be transmitted in N frequency-domain resource blocks including k(n) sub-carriers is determined, and the N frequency-domain resource blocks are divided into M groups of frequency-domain resource blocks in which each group includes L(m) frequency-domain resource blocks having equal bandwidths, wherein the sub-carrier spacings of the L(m) frequency-domain resource blocks in the same group among the M groups of frequency-domain resource blocks are equal, and the sub-carrier spacings of adjacent groups are unequal; the data to be transmitted on the L(m) frequency-domain resource blocks in each group of frequency-domain resource blocks is respectively processed to from L(m) groups of data sequences, and the L(m) groups of data sequences are processed to form a group of data sequences; and M groups of data sequences of the M groups of frequency-domain resource blocks are processed to form a group of combined data sequences, and the group of combined data sequences is transmitted. In the M groups of frequency-domain resource blocks in the present solution, the frequency-domain resource blocks in different groups may have equal or unequal bandwidths, so that waveform functions having different parameters may be used for windowing or filtering, thereby solving the problem in the related art of it being impossible to flexibly support a multi-bandwidth channel, and also solving the problem of processing sub-bands of different sub-carrier spacings.

It should be noted that n represents the serial number of a frequency-domain resource block, m represents the serial number of a group, and L(m) represents the number of resource blocks of an mth group.

It should be further noted that, in the step S204, the reasons for "the N frequency-domain resource blocks are divided into M groups of frequency-domain resource blocks in which each group includes L(m) frequency-domain resource blocks" include: (1) the sub-carrier spacings between different groups may be different and may be respectively processed, and then the time-domain data of the different groups are superposed. (2) The frequency-domain resource blocks between different groups may have equal or unequal bandwidths, and waveform functions having different parameters may be used for windowing or filtering. (3) The widths of the frequency-domain resource blocks in the same group are equal, thereby facilitating to perform unified windowing or filtering by using the same waveform function, and reducing the processing complexity.

In an optional embodiment, the method further includes: the bandwidths of every L(m) frequency-domain resource blocks in each group are equal.

In an optional embodiment, the method further includes: in the L(m) frequency-domain resource blocks in each group of frequency-domain resource blocks, each frequency-domain resource block includes the same number of sub-carriers.

In an optional embodiment, the method further includes: in the M groups of frequency-domain resource blocks, the bandwidths of the frequency-domain resource blocks in adjacent groups are unequal.

In an optional embodiment, the method further includes: in the M groups of frequency-domain resource blocks, the bandwidths of the frequency-domain resource blocks in different groups are equal.

In an optional embodiment, the method further includes: the ratio of bandwidths of the frequency-domain resource blocks in different groups meets an i power of 2, wherein i is an integer; when i=0, it indicates that the bandwidths of two frequency-domain resource blocks are equal; and when i is not equal to 0, it indicates that the bandwidths of the two frequency-domain resource blocks are unequal.

In an optional embodiment, the method further includes: in the N frequency-domain resource blocks, the ratio of adjacent sub-carrier spacings of any two frequency-domain resource blocks meets an i power of 2, wherein when i=0, it indicates that the sub-carrier spacings of the two frequency-domain resource blocks are equal; and when i#0, it indicates that the sub-carrier spacings of the two frequency-domain resource blocks are unequal.

In an optional embodiment, in the step S206, "the data to be transmitted on the L(m) frequency-domain resource blocks in each group is respectively processed to from L(m) groups of data sequences", the processing includes inverse Fourier transform. The inverse Fourier transform is oversampling inverse Fourier transform, the number of points of inverse fast Fourier transform (IFFT) of the inverse Fourier transform or the number of points of inverse discrete Fourier transform (IDFT) is greater than or equal to k(n).

Further, the number of points of IFFT is less than the sum of the numbers of sub-carriers included in the N frequency-domain resource blocks.

Further, inverse Fourier transform is performed on a certain frequency-domain resource block, and a zero-frequency position during an inverse Fourier transform operation is within the range of the present frequency-domain resource block. The zero-frequency positions during the inverse Fourier transform operation of different frequency-domain resource blocks are different.

Further, inverse Fourier transform is performed on a certain frequency-domain resource block, and the zero-frequency position (or a zero sub-carrier) during the inverse Fourier transform operation is one of k(n) sub-carriers of each resource block.

Further, inverse Fourier transform is performed on the data to be transmitted to form a group of data sequences, and inverse Fourier transform is respectively performed on the data to be transmitted on the L(m) frequency-domain resource blocks to form L(m) groups of data sequences.

Further, before performing the inverse Fourier transform on the data to be transmitted, fast Fourier transform (FFT for short) or discrete Fourier transform (DFT for short) is further performed.

In an optional embodiment, in the step S206, "the L(m) groups of data sequences are processed to form a group of data sequences", the processing includes inverse Fourier transform, wherein the inverse Fourier transform is oversampling inverse Fourier transform, and the number of points of IFFT of the inverse Fourier transform is greater than L(m).

Further, the inverse Fourier transform includes: one instance of inverse Fourier transform is performed on every L(m) pieces of data, wherein the every L(m) pieces of data come from the L(m) groups of data sequences respectively, for example, the L(m) groups of data sequences are respectively in L(m) rows; and then, extracting L(m) pieces of data according to columns, and one instance of inverse Fourier transform is performed on the extracted every L(m) pieces of data.

Further, after some 0 are added to every L(m) pieces of data, inverse Fourier transform is performed, that is, the L(m) groups of data sequences are processed further includes: multiple groups of zero data sequences are added, and then inverse Fourier transform is performed.

Further, a group of data sequences is a group of time-domain data sequences, which is formed by serially connecting time-domain data sequences generated by multiple inverse Fourier transform.

Further, the ratio of lengths of the group of time-domain data sequences in different groups meets an i power of 2, wherein when i=0, it indicates that the lengths of the group of time-domain data sequences in different groups are equal; and when i is not equal to 0, it indicates that lengths of the group of time-domain data sequences in different groups are unequal.

In an optional embodiment, two groups of data sequences corresponding to two groups of frequency-domain resource blocks are processed to form a group of combined data sequences includes: an addition operation on M groups of data sequences is performed to form a group of data sequences.

Further, the ratio of the numbers of the groups of data sequences in different groups during the addition operation meets an i power of 2, wherein when i=0, it indicates that the numbers of the groups of time-domain data sequences in different groups are equal; and when i is not equal to 0, it indicates that the numbers of the groups of time-domain data sequences in different groups are unequal.

It should be noted that, in the embodiments of the present invention, m=1, 2, ... , M; 1<M<=N; L(m)>=1; L(1)+ L(2)+ ... + L(M)=N.

Further, the addition operation on the M groups of data sequences is performed to form the group of data sequences further includes: before the addition operation is performed, a point multiplication operation on at least one group of data sequences is performed. A sequence to be subjected to point multiplication in the point multiplication operation is a sequence in which the modulus is equal and phases change in sequence.

Further, the addition operation on the M groups of data sequences is performed to form the group of data sequences further includes: before the addition operation is performed, a windowing operation or a filtering operation on the group of data sequences in each group is performed.

In an optional embodiment, in the present embodiment, the group of data sequences is transmitted further includes: the group of data sequences is filtered.

Further, the group of data sequences is transmitted further includes: each frequency-domain resource block is filtered by using the same waveform function.

Further, the filtering is single-phase filtering or multi-phase filtering.

Further, filtering functions used for the multi-phase filtering include: a root raised cosine function, or a raised cosine function, or an isotropic orthogonal transform algorithm (IOTA) function, or a 1+D function, etc.

Further, the group of data sequences is transmitted further includes: a windowing operation on the group of data sequences is performed.

Further, the group of data sequences is transmitted further includes: by means of a windowing operation or a multi-phase filtering operation, each frequency-domain resource block is filtered by using the same waveform function.

Further, the data to be transmitted includes constellation point modulated data, and also includes reference signal data.

### Embodiment 1

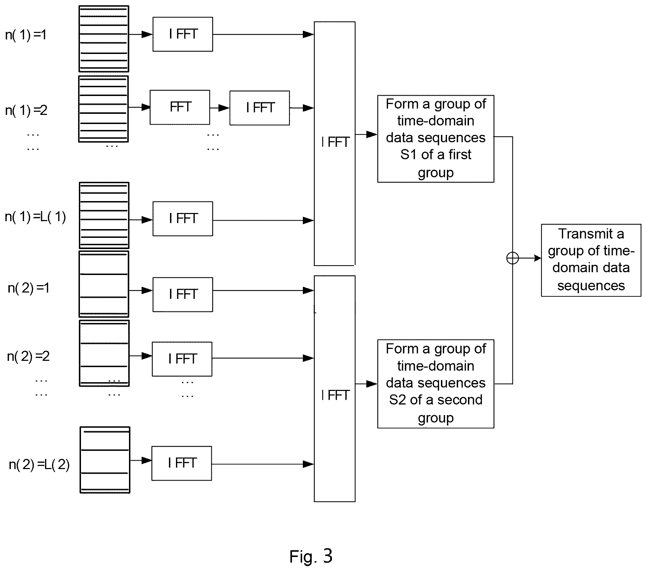

It should be noted that in Figs. 3-5, n represents the serial number of a frequency-domain resource block, m represents the serial number of a group, and L(m) represents the number of resource blocks in an mth group. n(1) and n(2) in the figures respectively represent the serial numbers of frequency-domain resource blocks in a first group and a second group.

Data to be transmitted is transmitted in N frequency-domain resource blocks, and the N frequency-domain resource blocks respectively include k(n) sub-carriers. The N frequency-domain resource blocks are divided into M groups, each group includes L(m) frequency-domain resource blocks, and the L(m) frequency-domain resource blocks have an equal bandwidth and an equal sub-carrier spacing. The sub-carrier spacings of adjacent groups are unequal. In the present embodiment, M=2, the bandwidths of the frequency-domain resource blocks in different groups are equal, that is, the bandwidths of the N frequency-domain resource blocks are equal, as shown in Fig. 3. In the N frequency-domain resource blocks, the ratio of adjacent sub-carrier spacings of any two frequency-domain resource blocks meets an i power of 2 (i.e., 2ⁱ), wherein when i=0, it indicates that the sub-carrier spacings of the two frequency-domain resource blocks are equal; and when i=1,it indicates that the sub-carrier spacings of the two frequency-domain resource blocks have a relationship of twice. In the present embodiment, the sub-carrier spacings in adjacent groups have a relationship of twice. In the N frequency-domain resource blocks, the ratio of the numbers of sub-carriers included in any two frequency-domain resource blocks meets an i power of 2 (i.e., 2ⁱ), wherein when i=0, it indicates that the numbers of sub-carriers included in the two frequency-domain resource blocks are equal; and when i=1, it indicates that the numbers of sub-carriers included in the two frequency-domain resource blocks have a relationship of twice.

Frequency-domain ranges where the two groups of frequency-domain resource blocks are located do not overlap with each other, and are distributed adjacent to each other in the frequency domain, there may be a guard interval between the two groups, or there may be no guard interval. The numbers of resource blocks included in the two groups are respectively L(1) and L(2), and L(1)+L(2)=N. Each group of L(m) frequency-domain resource blocks is continuously distributed in the frequency domain. The number of sub-carriers included in one resource block in the first group is 8, and the number of sub-carriers included in one resource block in the second group is 4.

The data to be transmitted on each group of L(m) frequency-domain resource blocks is processed to form L(m) groups of data sequences. In the present embodiment, inverse Fourier transform is performed on the data to be transmitted on all L(m) frequency-domain resource blocks in each group, and the inverse Fourier transform may be inverse fast Fourier transform (IFFT), or may be inverse discrete Fourier transform (IDFT), and each group forms L(m) groups of data sequences. That is, in the present embodiment, inverse Fourier transform is respectively performed on the data to be transmitted on the N frequency-domain resource blocks to form L(m) groups of data sequences. The inverse Fourier transform is oversampling inverse Fourier transform or non-oversampling inverse Fourier transform. In the present embodiment, the number of points of IFFT of the inverse Fourier transform of the first group is 16, the number of points of IFFT of the inverse Fourier transform of the second group is 8, and a corresponding zero frequency during the inverse Fourier transform operation is within the range of the present frequency-domain resource block. In the present embodiment, before inverse Fourier transform is performed on the data to be transmitted on the second frequency-domain resource block of the first group, Fourier transform is further performed, the Fourier transform may be fast Fourier transform (FFT), or may be discrete Fourier transform (DFT).

Then, the L(m) groups of data sequences in each group are respectively processed, and each group forms a group of data sequences. In the present embodiment, inverse Fourier transform is performed on L(1) groups of data sequences of the first group to form a group of data sequences S1; and inverse Fourier transform is performed on L(2) groups of data sequences of the second group to form a group of data sequences S2. The inverse Fourier transform is to perform one instance of inverse Fourier transform on every L(m) pieces of data, wherein the every L(m) pieces of data come from the L(m)groups of data sequences. For example, the L(m) groups of data sequences are respectively in L(m) rows, then L(m) pieces of data are extracted according to columns, and one instance of inverse Fourier transform is performed on the extracted every L(m) pieces of data. One inverse Fourier transform is processed on every L(m) pieces of data further includes: the inverse Fourier transform is processed after adding a plurality of pieces of zero data in the every L(m)pieces of data, wherein the number of points of IFFT of the inverse Fourier transform is greater than L(m). One instance of inverse Fourier transform is performed on every L(m)pieces of data to form a time-domain data sequence, and time-domain data sequences generated by performing multiple instances of inverse Fourier transform are connected in series to form a data sequence S1 or S2.

Then, the data sequence S1 and the data sequence S2 are processed to form a group of data sequences. In the present embodiment, the method for processing the data sequence S1 and the data sequence S2 includes, but is not limited to, performing an addition operation on the data sequence S1 and the data sequence S2 to form a group of time-domain data sequences.

In terms of transmitting the group of time-domain data sequences, the method further includes: a filtering or windowing operation is performed on the time-domain data sequences. In the present embodiment, the filtering is multi-phase filtering, and the multi-phase filtering uses the same waveform function, that is, the bandwidths of the N frequency-domain resource blocks are the same, so that each frequency-domain resource block uses the same waveform function.

### Embodiment 2

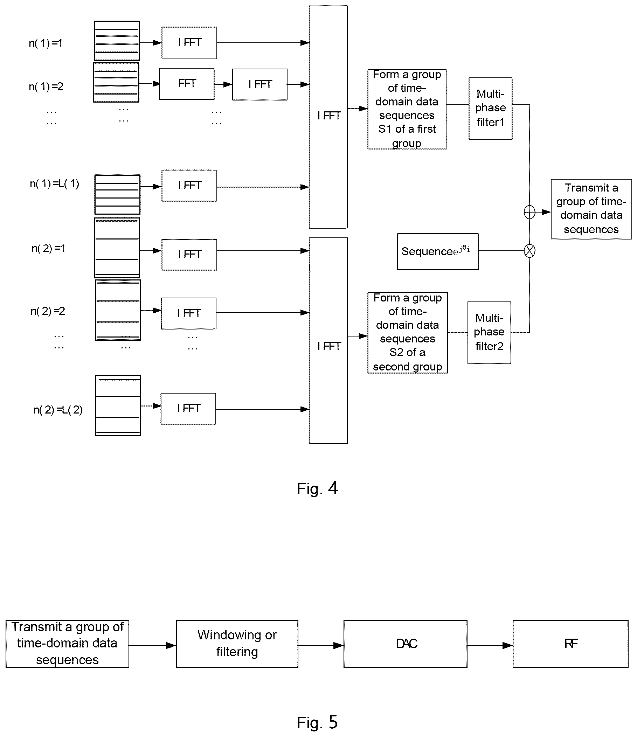

As shown in Fig. 4, Fig. 4 is another schematic diagram of an optional data transmission method in Embodiment 2, data to be transmitted is transmitted in N frequency-domain resource blocks, and the N frequency-domain resource blocks respectively include k(n) sub-carriers. The N frequency-domain resource blocks are divided into M groups, each group includes L(m) frequency-domain resource blocks, and the L(m) frequency-domain resource blocks have an equal bandwidth and an equal sub-carrier spacing. The sub-carrier spacings of adjacent groups are unequal. In the present embodiment, M=2, the bandwidths of the frequency-domain resource blocks in different groups are unequal. In the N frequency-domain resource blocks, the ratio of adjacent sub-carrier spacings of any two frequency-domain resource blocks meets an i power of 2 (i.e., 2ⁱ), wherein when i=0, it indicates that the sub-carrier spacings of the two frequency-domain resource blocks are equal; and when i=1,it indicates that the sub-carrier spacings of the two frequency-domain resource blocks have a relationship of twice. In the present embodiment, the sub-carrier spacings in adjacent groups have a relationship of twice. The ratio of the bandwidths of the frequency-domain resource blocks in different groups meets an i power of 2 (i.e., 2ⁱ), wherein i is an integer. When i=0, it indicates that the bandwidths of the two frequency-domain resource blocks are equal; and when i#1, it indicates that the bandwidths of the two frequency-domain resource blocks are unequal. In the present embodiment, the ratio of the bandwidths of the frequency-domain resource blocks in different groups meets a relationship of twice. In the present embodiment, in the N frequency-domain resource blocks, the number of sub-carriers included in any two frequency-domain resource blocks is equal and is 4.

Frequency-domain ranges where the two groups of frequency-domain resource blocks are located do not overlap with each other, and are distributed adjacent to each other in the frequency domain, there may be a guard interval between the two groups, or there may be no guard interval. The numbers of resource blocks included in the two groups are respectively L(1) and L(2), and L(1)+L(2)=N. Each group of L(m) frequency-domain resource blocks is continuously distributed in the frequency domain.

The data to be transmitted on L(m) frequency-domain resource blocks in each group is processed to form L(m) groups of data sequences. In the present embodiment, inverse Fourier transform is performed on the data to be transmitted on all L(m)frequency-domain resource blocks in each group, and the inverse Fourier transform may be inverse fast Fourier transform (IFFT), or may be inverse discrete Fourier transform (IDFT), and each group forms L(m) groups of data sequences. That is, in the present embodiment, inverse Fourier transform is respectively performed on the data to be transmitted on the N frequency-domain resource blocks to form N groups of data sequences, wherein the inverse Fourier transform is oversampling inverse Fourier transform or non-oversampling inverse Fourier transform. In the present embodiment, the number of points of IFFT of the inverse Fourier transform of the first group is 8, the number of points of IFFT of the inverse Fourier transform of the second group is 8, and a corresponding zero frequency during an inverse Fourier transform operation is within the range of the present frequency-domain resource block.

Then, the L(m) groups of data sequences in each group are processed, and each group forms a group of data sequences. In the present embodiment, inverse Fourier transform is performed on L(1) groups of data sequences of the first group to form a group of data sequences S1; and inverse Fourier transform is performed on L(2) groups of data sequences of the second group to form a group of data sequences S2. The inverse Fourier transform is to perform one instance of inverse Fourier transform on every L(m) pieces of data, wherein the every L(m) pieces of data come from the L(m) groups of data sequences. For example, the L(m) groups of data sequences are respectively in L(m) rows, then L(m) pieces of data are extracted according to columns, and one instance of inverse Fourier transform is performed on the extracted every L(m) pieces of data. One instance of inverse Fourier transform on every L(m) pieces of data is performed further includes: inverse Fourier transform is performed after adding a plurality of pieces of zero data in the every L(m) pieces of data, wherein the number of points of IFFT of the inverse Fourier transform is greater than L(m). One instance of inverse Fourier transform is performed on every L(m) pieces of data to form a time-domain data sequence, and time-domain data sequences generated by performing multiple instances of inverse Fourier transform are connected in series to form a data sequence S1 or S2.

Then, the data sequence S1 and the data sequence S2 are processed to form a group of data sequences. In the present embodiment, the method for processing the data sequence S1 and the data sequence S2 includes, but is not limited to, a filtering or windowing operation is performed on the data sequence S1, and a filtering or windowing operation, a point multiplication operation and an addition operation are performed on the data sequence S2. Since the frequency-domain resource blocks in the first group and the second group have different bandwidths, a multi-phase filtering operation is respectively performed on the data sequences S1 and S2, and used waveform functions are different, that is, waveform function parameters are different (for example, different waveform function types, or the same waveform function type, but different specific parameters). The point multiplication operation may include: the point multiplication operation is performed on the data sequence S1, or the point multiplication operation is performed on the data sequence S2. In the present embodiment, after the multi-phase filtering operation is performed on the data sequence S2, the point multiplication operation is performed on the data sequence S2 and a sequence e^{jθi} (wherein i=0, 1, 2, ...), then the addition operation is performed on the data sequence S2 and the data sequence S1 on which the multi-phase filtering operation has been performed, so as to form a group of time-domain data sequences, and the group of time-domain data sequences is transmitted.

### Embodiment 3

In terms of transmitting the group of time-domain data sequences, the method further includes: as shown in Fig. 5, Fig. 5 is a schematic diagram of an optional method for transmitting a group of time-domain data sequences in Embodiment 3. In Fig. 5, if a filtering or windowing operation is not performed before a group of time-domain data sequences is formed, filtering or windowing is performed on the group of time-domain data sequences. Then, a digital-to-analog converter (DAC) process and a radio frequency (RF) process are performed.

Through the description of the above embodiments, those skilled in the art may clearly understand that the method according to the above embodiments may be implemented by means of software plus a necessary general hardware platform, and certainly may also be implemented by hardware, but in many cases, the former is a better implementation. Based on this understanding, the technical solutions of the present invention substantially or the part contributing to the prior art may be implemented in the form of a software product, the computer software product is stored in a storage medium (e.g., an ROM/RAM, a magnetic disk, and an optical disk), and includes several instructions for enabling a terminal device (which may be a mobile phone, a computer, a server or a network device or the like) to execute the method in according to the embodiments of the present invention.

In the present embodiment, a data transmission apparatus is further provided, the apparatus is configured to implement the above embodiments and preferred implementations, and what has been described will not be repeatedly described again. As used below, the term "module" may implement a combination of software and/or hardware of a predetermined function. Although the apparatus described in the following embodiments is preferably implemented in software, implementations of hardware or a combination of software and hardware are also possible and conceivable.

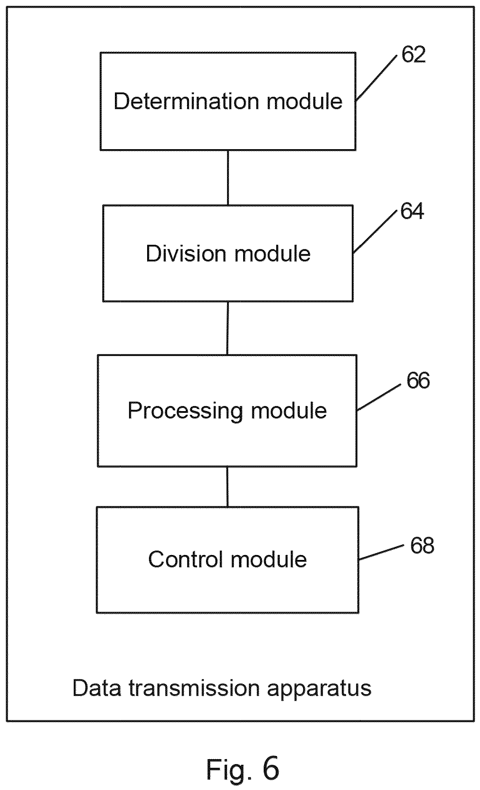

Fig. 6 is a structural block diagram of an optional data transmission apparatus according to an embodiment of the present invention, as shown in Fig. 6, including:
a determination module 62, configured to determine data to be transmitted in N frequency-domain resource blocks, wherein the N frequency-domain resource blocks respectively include k(n) sub-carriers, n is a positive integer less than or equal to N, N>=2, and k(n) is a positive integer;
a division module 64, configured to divide the N frequency-domain resource blocks into M groups of frequency-domain resource blocks in which each group includes L(m) frequency-domain resource blocks, wherein the L(m) frequency-domain resource blocks in each group have an equal bandwidth and an equal sub-carrier spacing, the sub-carrier spacings of adjacent groups are unequal, and m=1, 2, ... , M; 1<M<=N; L(m)>=1;L(1)+L(2)+...+L(M)=N;
a processing module 66, configured to respectively process the data to be transmitted on the L(m) frequency-domain resource blocks in each group of frequency-domain resource blocks to from L(m) groups of data sequences, and process the L(m) groups of data sequences to form a group of data sequences; and
a control module 68, configured to process M groups of data sequences of the M groups of frequency-domain resource blocks to form a group of combined data sequences, and transmit the group of combined data sequences.

By means of the apparatus, data to be transmitted in N frequency-domain resource blocks including k(n) sub-carriers is determined, and the N frequency-domain resource blocks are divided into M groups of frequency-domain resource blocks in which each group includes L(m) frequency-domain resource blocks having equal bandwidths, wherein the sub-carrier spacings of the L(m) frequency-domain resource blocks in the same group among the M groups of frequency-domain resource blocks are equal, and the sub-carrier spacings of adjacent groups are unequal; the data to be transmitted on the L(m) frequency-domain resource blocks in each group of frequency-domain resource blocks is respectively processed to from L(m) groups of data sequences, and the L(m) groups of data sequences are processed to form a group of data sequences; and M groups of data sequences of the M groups of frequency-domain resource blocks are processed to form a group of combined data sequences, and the group of combined data sequences is transmitted. In the M groups of frequency-domain resource blocks in the present solution, the frequency-domain resource blocks in different groups may have equal or unequal bandwidths, so that waveform functions having different parameters may be used for windowing or filtering, thereby solving the problem in the related art of it being impossible to flexibly support a multi-bandwidth channel.

It should be noted that n represents the serial number of a frequency-domain resource block, m represents the serial number of a group, and N(m) represents the number of resource blocks of an mth group.

In an optional embodiment, in the L(m) frequency-domain resource blocks in each group of frequency-domain resource blocks, each frequency-domain resource block includes the same number of sub-carriers.

In an optional embodiment, in the M groups of frequency-domain resource blocks, the bandwidths of the frequency-domain resource blocks in adjacent groups are unequal.

In an optional embodiment, in the M groups of frequency-domain resource blocks, the bandwidths of the frequency-domain resource blocks in different groups are equal.

In an optional embodiment, the ratio of bandwidths of the frequency-domain resource blocks in different groups meets an i power of 2, wherein i is an integer; when i=0, it indicates that the bandwidths of two frequency-domain resource blocks are equal; and when i is not equal to 0, it indicates that the bandwidths of the two frequency-domain resource blocks are unequal.

In an optional embodiment, in the N frequency-domain resource blocks, the ratio of adjacent sub-carrier spacings of any two frequency-domain resource blocks meets an i power of 2, wherein when i=0, it indicates that the sub-carrier spacings of the two frequency-domain resource blocks are equal; and when i#0, it indicates that the sub-carrier spacings of the two frequency-domain resource blocks are unequal.

In an exemplary embodiment, the computer-readable storage medium may include, but is not limited to, a variety of media capable of storing computer programs, such as a USB disk, a read-only memory (ROM for short), a random access memory (RAM or short), a mobile hard disk, a magnetic disk, an optical disk, etc.

An embodiment of the present invention further provides an electronic apparatus, including a memory and a processor, wherein the memory stores a computer program, and the processor is configured to execute the computer program to perform the steps in any of the above method embodiments.

In an exemplary embodiment, the electronic apparatus may further include a transmission device and an input and output device, wherein the transmission device is connected with the processor, and the input and output device is connected with the processor.

For specific examples in the present embodiment, reference may be made to the examples described in the above embodiments and exemplary implementations, and thus details are not described herein again in the present embodiment.

Obviously, it should be understood by those skilled in the art that, the modules or steps of the present invention may be implemented by a universal computing apparatus, may be concentrated on a single computing apparatus or distributed on a network composed of a plurality of computing apparatuses, and may also be implemented by program codes executable by the computing apparatus, therefore the modules or steps may be stored in a storage apparatus to be executed by the computing apparatus, and in some cases, the shown or described steps may be executed in a sequence different from that herein, or the steps are respectively made into various integrated circuit modules, or a plurality of modules or steps therein may be made into a single integrated circuit module for implementation. As such, the present invention is not limited to any particular hardware and software combination.

The foregoing descriptions are only preferred embodiments of the present invention, and are not intended to limit the present invention, and for those skilled in the art, the present invention may have various changes and modifications. Any modifications, equivalent replacements, improvements, and the like, made within the principles of the present invention, shall fall within the protection scope of the present invention.

## Claims

1. A data transmission method, comprising:
determining data to be transmitted in N frequency-domain resource blocks, wherein the N frequency-domain resource blocks respectively comprise k(n) sub-carriers, n is a positive integer less than or equal to N, N is an integer greater than 1, and k(n) is a positive integer;
dividing the N frequency-domain resource blocks into M groups of frequency-domain resource blocks in which each group comprises L(m) frequency-domain resource blocks, wherein sub-carrier spacings of the L(m) frequency-domain resource blocks in each group are equal, the sub-carrier spacings of adjacent groups are unequal, and L(m), m and M are all positive integers;
respectively processing the data to be transmitted on the L(m) frequency-domain resource blocks in each group of frequency-domain resource blocks to from L(m) groups of data sequences, and processing the L(m) groups of data sequences to form a group of data sequences; and
processing M groups of data sequences of the M groups of frequency-domain resource blocks to form a group of combined data sequences, and transmitting the group of combined data sequences.

2. The transmission method according to claim 1, wherein the method further comprises:
the bandwidths of every L(m) frequency-domain resource blocks in each group are equal.

3. The transmission method according to claim 1, wherein the method further comprises:
in the L(m) frequency-domain resource blocks in each group of frequency-domain resource blocks, each frequency-domain resource block comprises the same number of sub-carriers.

4. The transmission method according to claim 1, wherein the method further comprises:
in the M groups of frequency-domain resource blocks, the bandwidths of the frequency-domain resource blocks in adjacent groups are unequal.

5. The transmission method according to claim 1, wherein the method further comprises:
in the M groups of frequency-domain resource blocks, the bandwidths of the frequency-domain resource blocks in different groups are equal.

6. The transmission method according to claim 1, wherein the method further comprises:
the ratio of bandwidths of the frequency-domain resource blocks in different groups meets an i power of 2, wherein i is an integer; when i=0, it indicates that the bandwidths of two frequency-domain resource blocks are equal; and when i is not equal to 0, it indicates that the bandwidths of the two frequency-domain resource blocks are unequal.

7. The transmission method according to claim 1, wherein the method further comprises:
in the N frequency-domain resource blocks, the ratio of adjacent sub-carrier spacings of any two frequency-domain resource blocks meets an i power of 2, wherein when i=0, it indicates that the sub-carrier spacings of the two frequency-domain resource blocks are equal; and when i≠0, it indicates that the sub-carrier spacings of the two frequency-domain resource blocks are unequal.

8. The transmission method according to claim 1, wherein the method further comprises:
the ratio of lengths of the group of time-domain data sequences in different groups meets an i power of 2, wherein when i=0, it indicates that the lengths of the group of time-domain data sequences in different groups are equal; and when i is not equal to 0, it indicates that lengths of the group of time-domain data sequences in different groups are unequal.

9. A data transmission apparatus, comprising:
a determination module, configured to determine data to be transmitted in N frequency-domain resource blocks, wherein the N frequency-domain resource blocks respectively include k(n) sub-carriers, n is a positive integer less than or equal to N, N is an integer greater than 1, and k(n) is a positive integer;
a division module, configured to divide the N frequency-domain resource blocks into M groups of frequency-domain resource blocks in which each group comprises L(m) frequency-domain resource blocks, wherein sub-carrier spacings of the L(m) frequency-domain resource blocks in each group are equal, the sub-carrier spacings of adjacent groups are unequal, and L(m), m and M are all positive integers;
a processing module, configured to respectively process the data to be transmitted on the L(m) frequency-domain resource blocks in each group of frequency-domain resource blocks to from L(m) groups of data sequences, and process the L(m) groups of data sequences to form a group of data sequences; and
a control module, configured to process M groups of data sequences of the M groups of frequency-domain resource blocks to form a group of combined data sequences, and transmit the group of combined data sequences.

10. The data transmission apparatus according to claim 9, wherein the ratio of bandwidths of the frequency-domain resource blocks in different groups meets an i power of 2, wherein i is an integer; when i=0, it indicates that the bandwidths of two frequency-domain resource blocks are equal; and when i is not equal to 0, it indicates that the bandwidths of the two frequency-domain resource blocks are unequal.

11. A computer-readable storage medium, wherein the storage medium stores a computer program, and the computer program is configured to cause, when executed by a processor, the processor to perform the method as claimed in any of claims 1-8.

12. An electronic apparatus, comprising a memory and a processor, wherein the memory stores a computer program, and the processor is configured to execute the computer program to perform the method as claimed in any of claims 1-8.
